(19) Europäisches Patentamt
European Patent Office
Office européen des brevets

(11) **EP 4 152 851 A1**

(12) **EUROPEAN PATENT APPLICATION**
published in accordance with Art. 153(4) EPC

(43) Date of publication:
**22.03.2023 Bulletin 2023/12**

(21) Application number: **21803370.2**

(22) Date of filing: **12.05.2021**

(51) International Patent Classification (IPC):
**H04W 72/04** $^{(2009.01)}$    **H04B 7/024** $^{(2017.01)}$

(86) International application number:
**PCT/CN2021/093242**

(87) International publication number:
**WO 2021/228119 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2020 CN 202010414429**

(71) Applicant: **JRD Communication (Shenzhen) Ltd
Shenzhen, Guangdong 518052 (CN)**

(72) Inventors:
• **LI, Tian
  Shenzhen, Guangdong 518052 (CN)**
• **SHENG, Jia
  Shenzhen, Guangdong 518052 (CN)**

(74) Representative: **Murgitroyd & Company
Murgitroyd House
165-169 Scotland Street
Glasgow G5 8PL (GB)**

(54) **BANDWIDTH PART SWITCHING METHOD, MOBILE COMMUNICATION SYSTEM, AND UE**

(57)    Disclosed in the present invention are a bandwidth part switching method, a mobile communication system, and a UE. The UE uses a first bandwidth part to simultaneously receive switching requests from a plurality of transmission/reception points in a first time slot; calculates a scheduling time offset value on the basis of a plurality of scheduling time offsets decoded from the switching requests; and does not perform wireless signal transmission in a duration of time after the end of the time of the first three symbols in the first time slot. The duration of time is determined by the scheduling time offset value.

First transmission/reception point TRP1 and second transmission/reception point TRP2 respectively send a DCI to a user equipment UE to request a BWP bandwidth part switching step — 410

User equipment UE calculates a scheduling time offset value $T_{OFFSET}$ according to the scheduling time offset contained in the DCI — 420

User equipment UE maintains a state of not transmitting and not receiving wireless signals within a time slot range corresponding to the scheduling time offset value $T_{OFFSET}$. The receiving process in step 410 is to use a first bandwidth part. The transmission and reception after the scheduling time offset value $T_{OFFSET}$ uses a second bandwidth part different from the first bandwidth part — 430

FIG. 4

## Description

This application claims priority to Chinese Patent Application No. 202010414429.0, filed with the Chinese Patent Office on May 15, 2020 and entitled "BANDWIDTH PART SWITCHING METHOD", which is incorporated herein by reference in its entirety.

TECHNICAL FIELD

The present disclosure relates to the field of 5G new radio technologies, and particularly to a bandwidth part (BWP) switching method in a multi-transmission/reception point (TRP) environment.

BACKGROUND

In the 3GPP international standard meeting RAN1#95, a multi-transmission/reception point TRP/panel transmission protocol was formulated, including a scheduling method for uplink and downlink transmission and a bandwidth part switching method.

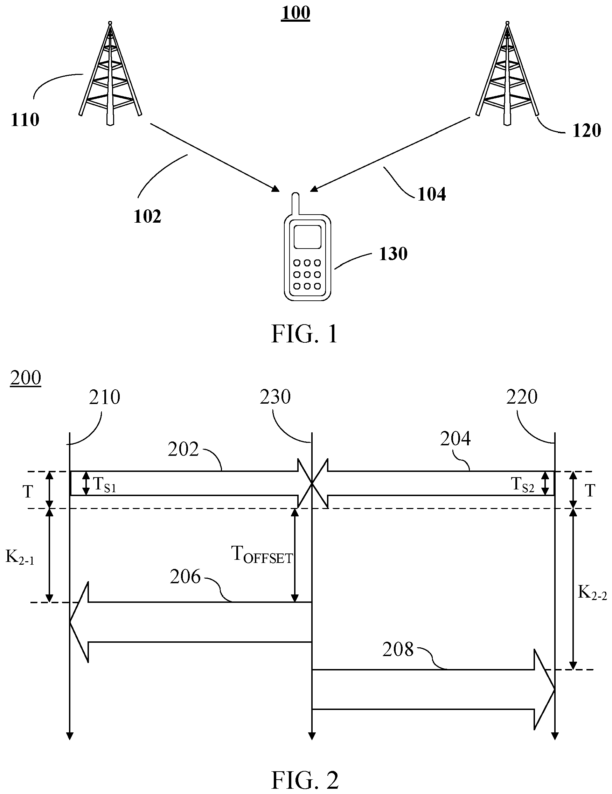

As illustrated in FIG. 1, two transmission/reception points TRP1 110 and TRP2 120 respectively transmit a first switching request 102 and a second switching request 104 to a user equipment (UE) 130.

In the 3GPP Release 15, data scheduling timing is defined to include several scheduling time offsets $K_0$ to $K_2$ or is called transmission time restriction. The number of time slots is represented by a positive integer, and the time offset between each uplink and downlink communication is respectively defined.

However, in the environment of multiple transmission/reception points TRPs, when each transmission/reception point TRP requires independent resource allocation or other control information, the existing scheduling mechanism may have room for improvement.

In Release 16, non-coherent joint transmission (NC-JT) adopts multi-transmission/reception point TRP/panel transmission technology, and the scheduling timing can be determined according to single physical downlink control channel PDCCH or multiple physical downlink control channels PDCCHs.

A bandwidth part used by a user equipment UE to connect to a mobile network is generally determined by a higher layer parameter, such as a downlink bandwidth part (BWP-Downlink), an initial downlink bandwidth part (initialDownlinkBWP), an uplink bandwidth part (BWP-Uplink), or an initial uplink bandwidth part (initialUplinkBWP) ), etc. This can be calculated with a series of other related parameters, and at most four groups can be used.

In the known standard specification, there is a set of higher layer parameters called CORESETPoolIndex, which can be obtained from a higher layer parameter ControlResourceSet and used to confirm a transmission/reception point TRP. When a user equipment UE receives a set of higher layer parameters ControlResourceSet in use by a mobile network, including two different CORESETPoolIndex, the user equipment UE expects to communicate with at most two different transmission/reception points TRPs.

Traditionally, the first method to trigger a bandwidth part switching is through a timer defined by a higher layer. Another method is through downlink control information (DCI). For example, a bandwidth part indicator field is defined in an uplink scheduling downlink control information (UL Scheduling DCI) (e.g., DCI format 0_1), and a value of the bandwidth part indicator field indicates an uplink bandwidth part that should be used. When the user equipment UE receives an uplink scheduling downlink control information DCI, if the uplink bandwidth part that the user equipment UE is using is not the uplink bandwidth part that should be used, the user equipment UE must switch to the uplink bandwidth part designated by the uplink scheduling downlink control information DCI. In the environment of multiple transmission/reception points TRPs, the switching of the bandwidth part is performed cooperatively by all transmission/reception points TRPs.

However, when multiple downlink control information DCIs are scheduled and determined by multiple transmission/reception points TRPs respectively, some issues may arise. For example, if multiple transmission/reception points TRPs coincidentally trigger the bandwidth part switching procedure in the same time slot, the minimum transmission time limit lacks an effective mechanism for proper scheduling. If an offset value is not clearly defined, the user equipment UE cannot determine when to start a new bandwidth part transmission or reception. Therefore, the present disclosure proposes a bandwidth part switching method in a multi-transmission/reception point TRP/panel environment.

SUMMARY

In order to solve the above technical problems, the present disclosure provides a bandwidth part switching method for a user equipment UE in a mobile communication system to simultaneously connect a plurality of transmission/reception points TRPs for mobile network communication. First, the user equipment UE performs a receiving step to receive corresponding switching requests from the plurality of transmission/reception points TRPs, and each switching request includes a scheduling time offset. For example, the user equipment UE receives a first switching request RQ1 from a first transmission/reception point TRP1, the first switching request includes a first scheduling time offset, and the user equipment UE receives a second switching request from a second transmission/reception point TRP2, the second switching request includes a second scheduling time offset. Then, the user equipment UE calculates a scheduling time offset value $T_{OFFSET}$ according to corresponding scheduling time offsets decoded from the switching requests. The user equipment UE does not transmit and receive wireless signals within a duration of time after receiving the first switching request RQ1 and the second switching request RQ2.

The duration of time is determined by the scheduling time offset value $T_{OFFSET}$, and the user equipment UE receives the first switching request RQ1 and the second switching request RQ2 at approximately the same time.

In one embodiment, the first switching request RQ1 and the second switching request RQ2 are uplink scheduling downlink control information (UL Scheduling DCI) carried by a physical downlink control channel (PDCCH). The duration of time is counted from an end of a third symbol time in the first time slot and extends to a beginning of a time slot corresponding to the scheduling time offset value $T_{OFFSET}$. The scheduling time offsets are uplink transmission offsets ($K_2$) as defined by a 5G new radio technology standard specification release 16, and the receiving step is performed on a first bandwidth part.

The user equipment UE includes a minimum scheduling offset and calculates a minimum scheduling offset restriction $K_{2min}$ from a minimum available scheduling offset indicator field in the uplink scheduling downlink control information DCI.

A step of calculating the scheduling time offset value $T_{OFFSET}$ can include taking a minimum value as the scheduling time offset value $T_{OFFSET}$ from the minimum scheduling offset restriction $K_{2min}$ and at least the scheduling time offsets.

Calculating the scheduling time offset value $T_{OFFSET}$ can also include calculating a maximum value of the scheduling time offsets and selecting a smaller one as the scheduling time offset value $T_{OFFSET}$ from the minimum scheduling offset restriction $K_{2min}$ and the maximum value.

Another calculating method of the scheduling time offset value $T_{OFFSET}$ can also include calculating an average value of scheduling time offsets obtained by the user equipment UE from each connected transmission/reception point TRP and selecting a smaller one as the scheduling time offset value $T_{OFFSET}$ from the minimum scheduling offset restriction $K_{2min}$ and the average value.

A step of calculating the scheduling time offset value $T_{OFFSET}$ can also include the user equipment UE reading a corresponding scheduling time offset as a selected value from a DCI carried by a transmission/reception point and selecting a smaller one as the scheduling time offset value $T_{OFFSET}$ from the minimum scheduling offset restriction $K_{2min}$ and the selected value; wherein the transmission/reception point is specified by a higher layer parameter CORESETPoolIndex. For example, when CORESETPoolIndex=0, it corresponds to a transmission/reception point whose ID is 0.

Another method of calculating the scheduling time offset value $T_{OFFSET}$ can also include the user equipment UE selecting an earliest decoded scheduling time offset as a selected value from the switching requests received from all connected transmission/reception points TRPs and selecting a smaller one as the scheduling time offset value $T_{OFFSET}$ from the minimum scheduling offset restriction $K_{2min}$ and the selected value.

In another embodiment, the first switching request and the second switching request are downlink scheduling downlink control information (DL Scheduling DCI) carried by a physical downlink control channel PDCCH. The scheduling time offsets are downlink transmission offsets ($K_0$) as defined by a 5G new radio technology standard specification release 16, and the receiving step is performed at a first bandwidth part. After the number of time slots corresponding to the scheduling time offset value $T_{OFFSET}$, the user equipment UE uses a second bandwidth part different from the first bandwidth part to connect to each transmission/reception point TRP. The user equipment UE calculates a minimum scheduling offset restriction $K_{0min}$ according to a higher layer parameter (physical downlink shared channel aggregation factor; pdsch-Aggregation Factor).

A step of calculating the scheduling time offset value $T_{OFFSET}$ can include taking a maximum value from the scheduling time offsets and taking a minimum value as the scheduling time offset value $T_{OFFSET}$ from the $K_{0min}$ and the maximum value.

A step of calculating the scheduling time offset value $T_{OFFSET}$ can also include the user equipment UE selecting one from all connected transmission/reception points TRPs to allow a corresponding scheduling time offset as a selected value and selecting a smaller one as the scheduling time offset value $T_{OFFSET}$ from the $K_{0min}$ and the selected value.

A step of calculating the scheduling time offset value $T_{OFFSET}$ can also include the user equipment UE selecting an earliest decoded scheduling time offset as a selected value from the switching requests received from all connected transmission/reception points TRPs and selecting a smaller one as the scheduling time offset value $T_{OFFSET}$ from the $K_{0min}$ and the selected value.

Because the above-mentioned bandwidth part switching method is mainly implemented by the mobile communication system and the user equipment without changing the hardware structure, the claims of the present invention also claim to protect the mobile communication system and the user equipment that can be used to execute the above-mentioned bandwidth part switching method. Because the specific embodiments of the mobile communication system and the user equipment have been completely disclosed in the above-mentioned bandwidth part switching method, they will not be repeated. More specific embodiments will be described in detail later with the accompanying drawings.

BRIEF DESCRIPTION OF THE DRAWINGS

In order to illustrate the embodiments or technical solutions in the prior art more clearly, the following briefly introduces the accompanying drawings that are required to be used in the description of the embodiments or the prior art. Obviously, the drawings in the following description are only some embodiments of the invention. For those of ordinary skill in the art, other drawings can also be obtained from these drawings without creative effort.

FIG. 1 is a multi-TRP environment architecture 100 of a known mobile communication system.

FIG. 2 is an embodiment 200 of uplink bandwidth part switching.

FIG. 3 is an embodiment 300 of downlink bandwidth part switching.

FIG. 4 is a flowchart 400 of a method for implementing bandwidth part switching in a mobile communication system of the present disclosure.

DETAILED DESCRIPTION OF ILLUSTRATED EMBODIMENTS

The present disclosure is based on a multi-TRP environment architecture 100 of a mobile communication system in FIG. 1, but can be further extended to a method of performing a bandwidth part BWP switching method based on the multi-transmission/reception point TRP environment for a user equipment UE with N transmission/reception points TRPs simultaneously. Assuming that before switching the bandwidth part BWP, all transmission/reception points TRPs use a first bandwidth part BWP1 to communicate with the user equipment UE, then after the switching is completed, all the transmission/reception points TRPs use a second bandwidth part BWP2 to communicate with the user equipment UE. As for the usage scenarios, it is divided into uplink and downlink, and there are different embodiments respectively.

Referring to FIG. 2, FIG. 2 is an embodiment of uplink bandwidth part switching. For the convenience of description, the detailed process is described with two transmission/reception points TRPs. In an embodiment 200, two transmission/reception points TRP1 210, TRP2 220 and a user equipment (UE) 230 are included. The TRP1 210 and TRP2 220 coincidentally send a first switching request 202 and a second switching request 204 to the UE 230 in the same time slot T. The first switching request 202 is a first uplink scheduling downlink control information DCI1 carried by a first physical downlink control channel PDCCH1, and the second switching request 204 is a second uplink scheduling downlink control information DCI2 carried by a second physical downlink control channel PDCCH2. Each DCI includes a time domain resource assignment field, and the value solved therefrom is a scheduling time offset $K_2$ corresponding to the TRP1 210 and the TRP2 220, which is expressed as $K_{2-1}$ and $K_{2-2}$. If there are N transmission/reception points TRPs, the corresponding scheduling time offset is expressed as $K_{2-N}$. The UE 230 of the present disclosure uses a scheduling time offset value $T_{OFFSET}$ obtained by performing operations on these scheduling time offsets $K_2$ and a minimum scheduling offset restriction $K_{2min}$, as the timing basis for transmission of the second bandwidth part BWP2.

As an embodiment, assuming that the user equipment UE has set a higher layer parameter, that is minimum scheduling offset, the minimum scheduling offset restriction $K_{2min}$ is a minimum scheduling offset restriction defined by a minimum available scheduling offset indicator field in an uplink scheduling downlink control information (UL scheduling DCI). The so-called higher layer parameter generally refers to a parameter preset according to a higher layer system of a 5G communication network, which is known specification, and is only cited here as an example, without further description.

After the scheduling time offset value $T_{OFFSET}$ is calculated, the user equipment UE maintains a state of neither transmitting nor receiving wireless signals within $T_{OFFSET}$ time slots after the time slot T. The original step of triggering bandwidth part BWP switching is performed on a first bandwidth part BWP1, and after the bandwidth part switching is completed, the above-mentioned step of sending the physical uplink shared channel PUSCH is performed using the switched second bandwidth part BWP2.

In an embodiment, assuming that there are N transmission/reception points TRPs and one user equipment UE to form a multi-transmission/reception point TRP network environment, the calculation method of the scheduling time offset value $T_{OFFSET}$ is shown in the formula (1), from the minimum scheduling offset restriction $K_{2min}$ and at least these scheduling time offsets, a minimum value is taken as the scheduling time offset value $T_{OFFSET}$.

$$T_{OFFSET}=\min(K_{2\min}, K_{2\text{-}1}, K_{2\text{-}2},\ldots,K_{2\text{-}N}) \qquad (1)$$

In this embodiment, the time is based on a time slot as a basic unit. These scheduling time offset $K_2$ values are all integers, representing the number of time slots. Therefore, the user equipment UE actually maintains a state of not transmitting and not receiving between $T_{OFFSET}$ time slots after one time slot T.

Because the essence of the first switching request 202 and the second switching request 204 is a kind of uplink scheduling downlink control information (UL scheduling DCI), the transmission time only occupies three symbol times ($T_{S1}$ and $T_{S2}$ shown in FIG. 2), which is less than one time slot T. Therefore, to be more precise, the time that the user equipment UE maintains the non-transmitting and non-receiving state starts from the time after $T_{S1}$ (Tsz) until the end of the (T+ $T_{OFFSET}$)th time slot. Taking FIG. 2 as an example, the scheduling time offset value $T_{OFFSET}$ may be exactly equal to the smallest of $K_2$, that is $K_{2\text{-}1}$.

In another embodiment, considering the differences in the performance of different user equipments UEs themselves, if the user equipment UE takes a long time to switch the bandwidth part and does not want to continuously receive other uplink scheduling and downlink control information DCI during the period, it can use larger scheduling time offset value $T_{OFFSET}$. The user equipment UE may first calculate a maximum value of these scheduling time offsets, and then select the smaller one as the scheduling time offset value $T_{OFFSET}$ from the minimum scheduling offset restriction $K_{2\min}$ and the maximum value, as shown in the formula (2):

$$T_{OFFSET}=\min\{ K_{2\min}, \max(K_{2\text{-}1}, K_{2\text{-}2},\ldots,K_{2\text{-}N})\} \qquad (2)$$

In another embodiment, considering that in general, transmission reliability and performance are always difficult to achieve, a trade-off must be made, so taking a balance is also a method. As shown in formula (3), the user equipment UE first calculates an average value of the scheduling time offset $K_2$ obtained from each connected transmission/reception point TRP, and then selects the smaller one as the scheduling time offset value $T_{OFFSET}$ from the minimum scheduling offset restriction $K_{2\min}$ and the average value.

$$T_{OFFSET}=\min\{ K_{2\min}, (K_{2\text{-}1}, K_{2\text{-}2},\ldots,K_{2\text{-}N})/N \} \qquad (3)$$

In a further embodiment, to emphasize the simplification of design, the user equipment UE can directly make the scheduling time offset corresponding to a transmission/reception point TRP to a selected value and select the smaller one as the scheduling time offset value $T_{OFFSET}$ from the minimum scheduling offset restriction $K_{2\min}$ and the selected value, as shown in formula (4):

$$T_{OFFSET}=\min\{ K_{2\min}, K_2\} \qquad (4)$$

$K_2$ represents the selected value. The transmission/reception point is a TRP corresponding to a pre-configured or preset CORESETPoolIndex value (for example, CORESETPoolIndex=0). $K_2$ is a slot offset value decoded from a time domain resource assignment field in the uplink scheduling downlink control information DCI provided by the physical downlink control channel PDCCH of the TRP.

In another embodiment with simplified design, if the user equipment UE receives multiple uplink scheduling downlink control information DCIs at the same time, but only one downlink control information DCI can be selected for bandwidth part switching, other downlink control information DCIs are discarded. In addition to random selection, the method for selecting the downlink control information DCI can also directly adopt the first successful decoding. As shown in formula (5), the user equipment UE selects the earliest decoded scheduling time offset as a selected value $K_2$ from the switching requests received from all connected transmission/reception points TRPs, and then selects the smaller one as the scheduling time offset value $T_{OFFSET}$ from the minimum scheduling shift limit $K_{2\min}$ and the selected value $K_2$.

$$T_{OFFSET}=\min\{ K_{2\min}, K_2\} \qquad (5)$$

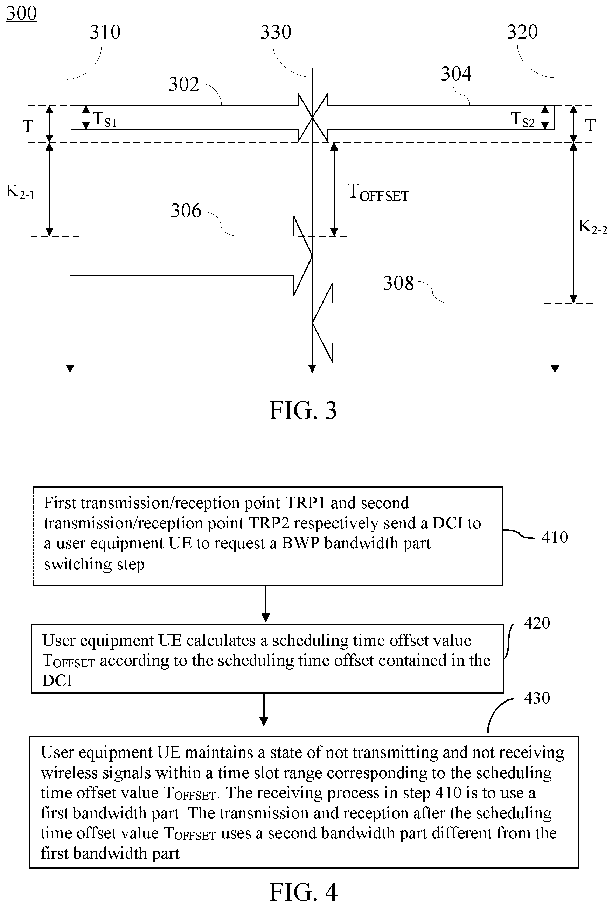

Referring to FIG. 3, FIG. 3 is an embodiment of downlink bandwidth part switching. The detailed process is also described with two transmission/reception points TRPs. In this embodiment 300, two transmission/reception points TRP1 310, TRP2 320 and one UE 330 are included. The TRP1 310 and TRP2 320 send a first switching request 302 and a second switching request 304 to the UE 330 in the same time slot T. The first switching request 302 is a first downlink scheduling downlink control information DCI1 carried by a first physical downlink control channel PDCCH1, and the second switching request 304 is a second downlink scheduling downlink control information DCI2 carried by a second physical downlink control channel PDCCH2. Each downlink scheduling DCI includes a time domain resource assignment field, and the value solved therefrom is a scheduling time offset $K_0$ corresponding to the TRP1 310 and the TRP2 320, which is expressed as $K_{0-1}$ and $K_{0-2}$. If there are N transmission/reception points TRPs, the corresponding scheduling time offset is expressed as $K_{0-N}$. The UE 330 of the present disclosure uses a scheduling time offset value $T_{OFFSET}$ obtained by performing operations on these scheduling time offsets $K_0$ and a minimum scheduling offset restriction $K_{0min}$, as the timing basis for transmission of new bandwidth part.

After the scheduling time offset value $T_{OFFSET}$ is calculated, the user equipment UE maintains a state of neither transmitting nor receiving wireless signals during the period after the time slot T. The original step of triggering bandwidth part BWP switching is performed on a first bandwidth part BWP1, and after the bandwidth part switching is completed, the above-mentioned receiving step is performed using the switched second bandwidth part BWP2.

In one embodiment, considering the performance difference of the user equipment UE, it may not be possible to detect other downlink scheduling downlink control information DCI (such as downlink control information DCI format 1_1) within the minimum delay time required for processing the bandwidth part switching process, and therefore tend to use larger scheduling time offsets. First, the user equipment UE calculates a minimum scheduling offset restriction $K_{0min}$ according to a higher layer parameter (physical downlink shared channel aggregation factor; pdsch-Aggregation Factor). Then, according to the formula (6), a maximum value is taken from these scheduling time offsets, and a minimum value is taken from the $K_{0min}$ and the maximum value as the scheduling time offset value $T_{OFFSET}$.

$$T_{OFFSET}=\min\{K_{0min}, \max(K_{0-1}, K_{0-2},\ldots,K_{0-N})\} \qquad (6)$$

In another embodiment, considering the requirement of simplifying the design, the user equipment UE can directly make the scheduling time offset corresponding to a transmission/reception point TRP as a selected value, and then select the smaller one as the scheduling time offset value $T_{OFFSET}$ from the $K_{0min}$ and the selected value.

$$T_{OFFSET}=\min\{K_{0min}, K_0\} \qquad (7)$$

$K_0$ represents the selected value. The transmission/reception point TRP is a TRP corresponding to a preconfigured or preset CORESETPoolIndex value (for example, CORESETPoolIndex=0). $K_2$ is a slot offset value decoded from a time domain resource assignment field) in the downlink scheduling downlink control information DCI provided by the physical downlink control channel PDCCH of the TRP.

In another embodiment with simplified design, if the user equipment UE receives multiple downlink scheduling downlink control information DCIs at the same time, but only one downlink scheduling downlink control information DCI can be selected for bandwidth part switching, other downlink scheduling downlink control information DCIs are discarded. In addition to random selection, the method for selecting the downlink scheduling downlink control information DCI can also directly adopt the first successful decoding. As shown in formula (8), the user equipment UE selects the earliest decoded scheduling time offset as a selected value $K_0$ from the switching requests received from all connected transmission/reception points TRPs, and then selects the smaller one as the scheduling time offset value $T_{OFFSET}$ from the minimum scheduling shift limit $K_{0min}$ and the selected value.

$$T_{OFFSET}=\min\{K_{0min}, K_0\} \qquad (8)$$

Summarizing the above embodiments, it can be summarized into a flowchart of a method for implementing bandwidth part switching in a mobile communication system shown in FIG. 4. First, in step 410, the first transmission/reception point TRP and the second transmission/reception point TRP respectively send a first bandwidth part switching request and a second bandwidth part switching request to a user equipment UE. In step 420, the user equipment UE calculates a scheduling time offset value $T_{OFFSET}$ according to a scheduling time offset K included in the first bandwidth part switching request and the second bandwidth part switching request. In step 430, the user equipment UE maintains a state of not transmitting and not receiving wireless signals within the time slot range corresponding to the scheduling time offset value $T_{OFFSET}$. The receiving process in step 410 is to use the first bandwidth part. Transmission and reception after the scheduled time offset value $T_{OFFSET}$ uses a second bandwidth part different from the first bandwidth part.

The present disclosure is a design improvement based on 3GPP NR. Although the present invention has been disclosed above with preferred embodiments, the above preferred embodiments are not intended to limit the present invention. Those skilled in the art can make various changes and modifications without departing from the spirit and scope of the present invention. Therefore, the protection scope of the present invention is subject to the scope defined by the claims.

**Claims**

1. A bandwidth part switching method for a user equipment in a mobile communication system to simultaneously connect a plurality of transmission/reception points (TRPs) for mobile network communication, comprising:

   the user equipment performing a receiving step to receive corresponding switching requests from the plurality of TRPs, each switching request comprising a scheduling time offset, and the receiving step further comprising at least:

   the user equipment receiving a first switching request from a first TRP, the first switching request comprising a first scheduling time offset; and
   the user equipment receiving a second switching request from a second TRP, the second switching request comprising a second scheduling time offset;

   the user equipment calculating a scheduling time offset value $T_{OFFSET}$ according to corresponding scheduling time offsets decoded from the switching requests;
   wherein the user equipment does not transmit and receive wireless signals within a duration of time after receiving the first switching request and the second switching request; wherein:

   the first switching request and the second switching request are used to request a bandwidth part in use for switching;
   the duration of time is determined by the scheduling time offset value $T_{OFFSET}$; and
   the user equipment simultaneously receives the first switching request and the second switching request in a first time slot using a first bandwidth part.

2. The bandwidth part switching method as claimed in claim 1, wherein:

   the first switching request and the second switching request are uplink scheduling downlink control information (DCI) carried by a physical downlink control channel and occupying first three symbol times in the first time slot;
   the duration of time is counted from an end of a third symbol time in the first time slot and extends to a beginning of a time slot corresponding to the scheduling time offset value $T_{OFFSET}$;
   the scheduling time offsets are uplink transmission offsets $K_2$ as defined by a 5G new radio technology standard specification release 16.

3. The bandwidth part switching method as claimed in claim 1, further comprising:
   after a time corresponding to the scheduling time offset value $T_{OFFSET}$, the user equipment switches to a second bandwidth part different from the first bandwidth part to communicate with the first TRP and the second TRP.

4. The bandwidth part switching method as claimed in claim 2, further comprising:
   the user equipment comprising a minimum scheduling offset and calculating a minimum scheduling offset restriction $K_{2min}$ from a minimum available scheduling offset indicator field in the uplink scheduling DCI.

5. The bandwidth part switching method as claimed in claim 4, wherein a step of calculating the scheduling time offset value $T_{OFFSET}$ comprises: taking a minimum value as the scheduling time offset value $T_{OFFSET}$ from the minimum scheduling offset restriction $K_{2min}$ and at least the scheduling time offsets.

6. The bandwidth part switching method as claimed in claim 4, wherein a step of calculating the scheduling time offset value $T_{OFFSET}$ comprises: calculating a maximum value of the scheduling time offsets; and
selecting a smaller one as the scheduling time offset value $T_{OFFSET}$ from the minimum scheduling offset restriction and the maximum value.

7. The bandwidth part switching method as claimed in claim 4, wherein a step of calculating the scheduling time offset value $T_{OFFSET}$ comprises: calculating an average value of scheduling time offsets obtained by the user equipment from each connected TRP; and
selecting a smaller one as the scheduling time offset value $T_{OFFSET}$ from the minimum scheduling offset restriction and the average value.

8. The bandwidth part switching method as claimed in claim 4, wherein a step of calculating the scheduling time offset value $T_{OFFSET}$ comprises:

   the user equipment reading a corresponding scheduling time offset as a selected value from a DCI carried by a TRP; and
   selecting a smaller one as the scheduling time offset value $T_{OFFSET}$ from the minimum scheduling offset restriction $K_{2min}$ and the selected value; wherein the TRP is specified by a higher layer parameter CORESETPoolIndex.

9. The bandwidth part switching method as claimed in claim 4, wherein a step of calculating the scheduling time offset value $T_{OFFSET}$ comprises:

   the user equipment selecting an earliest decoded scheduling time offset as a selected value from the switching requests received from all connected TRPs;
   selecting a smaller one as the scheduling time offset value $T_{OFFSET}$ from the minimum scheduling offset restriction and the selected value.

10. The bandwidth part switching method as claimed in claim 1, wherein:

    the first switching request and the second switching request are downlink scheduling DCI carried by a physical downlink control channel and occupying first three symbol times in the first time slot;
    the duration of time is counted from an end of a third symbol time in the first time slot and extends to a beginning of a time slot corresponding to the scheduling time offset value $T_{OFFSET}$;
    the scheduling time offsets are downlink transmission offsets $K_0$ as defined by a 5G new radio technology standard specification release 16.

11. The bandwidth part switching method as claimed in claim 10, further comprising:
    the user equipment calculating a minimum scheduling offset restriction $K_{0min}$ according to a higher layer parameter.

12. The bandwidth part switching method as claimed in claim 11, wherein a step of calculating the scheduling time offset value $T_{OFFSET}$ comprises:

    taking a maximum value from the scheduling time offsets; and
    taking a minimum value as the scheduling time offset value $T_{OFFSET}$ from the minimum scheduling offset restriction $K_{0min}$ and the maximum value.

13. The bandwidth part switching method as claimed in claim 11, wherein a step of calculating the scheduling time offset value $T_{OFFSET}$ comprises:

    the user equipment reading a corresponding scheduling time offset as a selected value from a DCI carried by a TRP; and
    selecting a smaller one as the scheduling time offset value $T_{OFFSET}$ from the minimum scheduling offset restriction $K_{0min}$ and the selected value, wherein a selected TRP is based on the TRP corresponding to the DCI in the switching request; wherein the TRP is specified by a higher layer parameter CORESETPoolIndex.

14. The bandwidth part switching method as claimed in claim 11, wherein a step of calculating the scheduling time offset value $T_{OFFSET}$ comprises:

    the user equipment selecting an earliest decoded scheduling time offset as a selected value from the switching requests received from all connected TRPs;
selecting a smaller one as the scheduling time offset value $T_{OFFSET}$ from the minimum scheduling offset restriction $K_{0min}$ and the selected value.

15. A mobile communication system, comprising a plurality of transmission/reception points (TRPs) connected to a user equipment simultaneously to allow the user equipment to perform mobile network communication, comprising:

the mobile communication system transmitting switching requests from the TRPs to allow the user equipment to receive a first switching request from a first TRP and receive a second switching request from a second TRP while using a first bandwidth part in a first time slot, wherein the first switching request comprises a first scheduling time offset, and the second switching request comprises a second scheduling time offset; wherein:
the user equipment calculates a scheduling time offset value $T_{OFFSET}$ according to corresponding scheduling time offsets decoded from the switching requests; the user equipment does not transmit and receive wireless signals within a duration of time after receiving the first switching request and the second switching request;
the first switching request and the second switching request are used to request a bandwidth part in use for switching; and
the duration of time is determined by the scheduling time offset value $T_{OFFSET}$.

16. The mobile communication system as claimed in claim 15, wherein:

the first switching request and the second switching request are uplink scheduling downlink control information (DCI) carried by a physical downlink control channel and occupying first three symbol times in the first time slot;
the duration of time is counted from an end of a third symbol time in the first time slot and extends to a beginning of a time slot corresponding to the scheduling time offset value $T_{OFFSET}$;
the scheduling time offsets are uplink transmission offsets $K_2$ as defined by a 5G new radio technology standard specification release 16.

17. The mobile communication system as claimed in claim 15, wherein:
after a time corresponding to the scheduling time offset value $T_{OFFSET}$, the user equipment switches to a second bandwidth part different from the first bandwidth part to communicate with the first TRP and the second TRP.

18. The mobile communication system as claimed in claim 16, wherein the user equipment comprises a minimum scheduling offset and calculates a minimum scheduling offset restriction $K_{2min}$ from a minimum available scheduling offset indicator field in the uplink scheduling DCI.

19. The mobile communication system as claimed in claim 18, wherein the user equipments takes a minimum value as the scheduling time offset value $T_{OFFSET}$ from the minimum scheduling offset restriction $K_{2min}$ and at least the scheduling time offsets.

20. The mobile communication system as claimed in claim 18, wherein the user equipment calculates a maximum value of the scheduling time offsets and selects a smaller one as the scheduling time offset value $T_{OFFSET}$ from the minimum scheduling offset restriction and the maximum value.

21. The mobile communication system as claimed in claim 18, wherein the user equipment calculates an average value of scheduling time offsets obtained from each connected TRP and selects a smaller one as the scheduling time offset value $T_{OFFSET}$ from the minimum scheduling offset restriction and the average value.

22. The mobile communication system as claimed in claim 18, wherein the user equipment reads a corresponding scheduling time offset as a selected value from a DCI carried by a TRP and selects a smaller one from the minimum scheduling offset restriction $K_{2min}$ and the selected value as the scheduling time offset value $T_{OFFSET}$; wherein the TRP is specified by a higher layer parameter CORESETPoolIndex.

23. The mobile communication system as claimed in claim 18, wherein the user equipment selects an earliest decoded scheduling time offset as a selected value from the switching requests received from all connected TRPs and selects a smaller one as the scheduling time offset value $T_{OFFSET}$ from the minimum scheduling offset restriction and the selected value.

24. The mobile communication system as claimed in claim 15, wherein:

the first switching request and the second switching request are downlink scheduling DCI carried by a physical downlink control channel and occupying first three symbol times in the first time slot;

the duration of time is counted from an end of a third symbol time in the first time slot and extends to a beginning of a time slot corresponding to the scheduling time offset value $T_{OFFSET}$;

the scheduling time offsets are downlink transmission offsets $K_0$ as defined by a 5G new radio technology standard specification release 16.

25. The mobile communication system as claimed in claim 24, wherein the user equipment calculates a minimum scheduling offset restriction $K_{0min}$ according to a higher layer parameter.

26. The mobile communication system as claimed in claim 25, wherein the user equipment takes a maximum value from the scheduling time offsets and takes a minimum value as the scheduling time offset value $T_{OFFSET}$ from the minimum scheduling offset restriction $K_{0min}$ and the maximum value.

27. The mobile communication system as claimed in claim 25, wherein:
the user equipment reads a corresponding scheduling time offset as a selected value from a DCI carried by a TRP and selects a smaller one as the scheduling time offset value $T_{OFFSET}$ from the minimum scheduling offset restriction $K_{0min}$ and the selected value, wherein:

a selected TRP is based on the TRP corresponding to the DCI in the switching request; and
the TRP is specified by a higher layer parameter CORESETPoolIndex.

28. The mobile communication system as claimed in claim 25, wherein:
the user equipment selects an earliest decoded scheduling time offset as a selected value from the switching requests received from all connected TRPs and selects a smaller one as the scheduling time offset value $T_{OFFSET}$ from the minimum scheduling offset restriction $K_{0min}$ and the selected value.

29. A user equipment capable of simultaneously connecting to a mobile communication system comprising a plurality of transmission/reception points (TRPs) for mobile network communication, comprising:

wherein the user equipment receives a first switching request from a first TRP and receives a second switching request from a second TRP while using a first bandwidth part in a first time slot, wherein the first switching request comprises a first scheduling time offset, and the second switching request comprises a second scheduling time offset;
wherein the user equipment calculates a scheduling time offset value $T_{OFFSET}$ according to corresponding scheduling time offsets decoded from the switching requests; the user equipment does not transmit and receive wireless signals within a duration of time after receiving the first switching request and the second switching request; wherein:

the first switching request and the second switching request are used to request a bandwidth part in use for switching; and
the duration of time is determined by the scheduling time offset value $T_{OFFSET}$.

30. The user equipment as claimed in claim 29, wherein:

the first switching request and the second switching request are uplink scheduling downlink control information (DCI) carried by a physical downlink control channel and occupying first three symbol times in the first time slot;
the duration of time is counted from an end of a third symbol time in the first time slot and extends to a beginning of a time slot corresponding to the scheduling time offset value $T_{OFFSET}$; and
the scheduling time offsets are uplink transmission offsets $K_2$ as defined by a 5G new radio technology standard specification release 16.

31. The user equipment as claimed in claim 29, wherein:
after a time corresponding to the scheduling time offset value $T_{OFFSET}$, the user equipment switches to a second bandwidth part different from the first bandwidth part to communicate with the first TRP and the second TRP.

32. The user equipment as claimed in claim 30, wherein:
the user equipment comprises a minimum scheduling offset and calculates a minimum scheduling offset restriction

$K_{2min}$ from a minimum available scheduling offset indicator field in the uplink scheduling DCI.

33. The user equipment as claimed in claim 32, wherein the user equipment takes a minimum value as the scheduling time offset value $T_{OFFSET}$ from the minimum scheduling offset restriction $K_{2min}$ and at least the scheduling time offsets.

34. The user equipment as claimed in claim 32, wherein the user equipment calculates a maximum value of the scheduling time offsets and selects a smaller one as the scheduling time offset value $T_{OFFSET}$ from the minimum scheduling offset restriction and the maximum value.

35. The user equipment as claimed in claim 32, wherein the user equipment calculates an average value of scheduling time offsets obtained from each connected TRP and selects a smaller one as the scheduling time offset value $T_{OFFSET}$ from the minimum scheduling offset restriction and the average value.

36. The user equipment as claimed in claim 32, wherein the user equipment reads a corresponding scheduling time offset as a selected value from a DCI carried by a TRP and selects a smaller one as the scheduling time offset value $T_{OFFSET}$ from the minimum scheduling offset restriction $K_{2min}$ and the selected value; wherein the TRP is specified by a higher layer parameter CORESETPoolIndex.

37. The user equipment as claimed in claim 32, wherein the user equipment selects an earliest decoded scheduling time offset as a selected value from the switching requests received from all connected TRPs and selects a smaller one as the scheduling time offset value $T_{OFFSET}$ from the minimum scheduling offset restriction and the selected value.

38. The user equipment as claimed in claim 29, wherein:

the first switching request and the second switching request are downlink scheduling DCI carried by a physical downlink control channel and occupying first three symbol times in the first time slot;
the duration of time is counted from an end of a third symbol time in the first time slot and extends to a beginning of a time slot corresponding to the scheduling time offset value $T_{OFFSET}$;
the scheduling time offsets are downlink transmission offsets $K_0$ as defined by a 5G new radio technology standard specification release 16.

39. The user equipment as claimed in claim 38, wherein:
the user equipment calculates a minimum scheduling offset restriction $K_{0min}$ according to a higher layer parameter.

40. The user equipment as claimed in claim 39, wherein the user equipment takes a maximum value from the scheduling time offsets and takes a minimum value as the scheduling time offset value $T_{OFFSET}$ from the minimum scheduling offset restriction $K_{0min}$ and the maximum value.

41. The user equipment as claimed in claim 39, wherein:

the user equipment reads a corresponding scheduling time offset as a selected value from a DCI carried by a TRP and selects a smaller one as the scheduling time offset value $T_{OFFSET}$ from the minimum scheduling offset restriction $K_{0min}$ and the selected value, wherein:

a selected TRP is based on the TRP corresponding to the DCI in the switching request; and
the TRP is specified by a higher layer parameter CORESETPoolIndex.

42. The user equipment as claimed in claim 39, wherein:
the user equipment selects an earliest decoded scheduling time offset as a selected value from the switching requests received from all connected TRPs and selects a smaller one as the scheduling time offset value $T_{OFFSET}$ from the minimum scheduling offset restriction $K_{0min}$ and the selected value.

**100**

FIG. 1

**200**

FIG. 2

FIG. 3

First transmission/reception point TRP1 and second transmission/reception point TRP2 respectively send a DCI to a user equipment UE to request a BWP bandwidth part switching step ⎯ 410

User equipment UE calculates a scheduling time offset value $T_{OFFSET}$ according to the scheduling time offset contained in the DCI ⟩ 420

User equipment UE maintains a state of not transmitting and not receiving wireless signals within a time slot range corresponding to the scheduling time offset value $T_{OFFSET}$. The receiving process in step 410 is to use a first bandwidth part. The transmission and reception after the scheduling time offset value $T_{OFFSET}$ uses a second bandwidth part different from the first bandwidth part ⟩ 430

FIG. 4

## INTERNATIONAL SEARCH REPORT

| International application No. |
|---|
| **PCT/CN2021/093242** |

### A.     CLASSIFICATION OF SUBJECT MATTER

H04W 72/04(2009.01)i;  H04B 7/024(2017.01)i

According to International Patent Classification (IPC) or to both national classification and IPC

### B.     FIELDS SEARCHED

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNABS, CNTXT, CNKI, VEN, DWPI, USTXT, EPTXT, WOTXT, 3GPP: 部分, 带宽, 切换, 多, 收发, 请求, 要求, 时间, 调度, 偏移, 延迟, 时延, 延时, 等待, part+, bandwidth, switch+, N, mult+, transmit+, send+, receiv+, transceiv+, request, requirement, time, schedul+, delay, wait+, offset+

### C.     DOCUMENTS CONSIDERED TO BE RELEVANT

| Category* | Citation of document, with indication, where appropriate, of the relevant passages | Relevant to claim No. |
|---|---|---|
| A | CN 109586881 A (KT CORPORATION) 05 April 2019 (2019-04-05)<br>     description, paragraphs 31-465, and figures 1-16 | 1-42 |
| A | CN 110383925 A (MEDIATEK SINGAPORE PTE. LTD.) 25 October 2019 (2019-10-25)<br>     entire document | 1-42 |
| A | WO 2020023416 A1 (QUALCOMM INCORPORATED) 30 January 2020 (2020-01-30)<br>     entire document | 1-42 |
| A | EP 3651396 A1 (PANASONIC INTELLECTUAL PROPERTY CORPORATION OF<br>AMERICA) 13 May 2020 (2020-05-13)<br>     entire document | 1-42 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 July 2021** | **02 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/093242**

| Patent document cited in search report | | | Publication date (day/month/year) | Patent family member(s) | | | Publication date (day/month/year) |
|---|---|---|---|---|---|---|---|
| CN | 109586881 | A | 05 April 2019 | US | 2019104543 | A1 | 04 April 2019 |
| | | | | US | 10721765 | B2 | 21 July 2020 |
| CN | 110383925 | A | 25 October 2019 | US | 2019254056 | A1 | 15 August 2019 |
| | | | | WO | 2019158077 | A1 | 22 August 2019 |
| | | | | TW | 201941635 | A | 16 October 2019 |
| WO | 2020023416 | A1 | 30 January 2020 | CN | 112425111 | A | 26 February 2021 |
| | | | | TW | 202015437 | A | 16 April 2020 |
| | | | | US | 2020029331 | A1 | 23 January 2020 |
| EP | 3651396 | A1 | 13 May 2020 | CN | 112272931 | A | 26 January 2021 |
| | | | | US | 2021051699 | A1 | 18 February 2021 |
| | | | | WO | 2020094344 | A1 | 14 May 2020 |

Form PCT/ISA/210 (patent family annex) (January 2015)

## REFERENCES CITED IN THE DESCRIPTION

**Patent documents cited in the description**

- CN 202010414429